# EUROPÄISCHE PATENTSCHRIFT

(11) **EP 2 020 369 B1**
(45) Veröffentlichungstag und Bekanntmachung des Hinweises auf die Patenterteilung: **05.12.2012**
(21) Anmeldenummer: 08159668.6
(22) Anmeldetag: 03.07.2008
(51) Int. Cl.: B62J 6/02

(54) **Scheinwerfer für ein Zweirad**
Headlamp for a bicycle
Phare pour un deux roues

(30) Priorität: 05.07.2007 DE 102007031447
(43) Veröffentlichungstag der Anmeldung: 04.02.2009
(73) Patentinhaber: Busch & Müller KG, 58540 Meinerzhagen (DE)
(72) Erfinder: Müller, Guido, 58540 Meinerzhagen (DE)
(74) Vertreter: Kahlhöfer, Hermann

(56) Entgegenhaltungen:
- DE-U1-202004 014 096

## Beschreibung

Gegenstand der vorliegenden Erfindung ist ein Scheinwerfer für ein Zweirad, insbesondere ein Fahrrad.

Scheinwerfer für Zweiräder mit Leuchtdioden sind bekannt. Diese werden üblicherweise durch Verschrauben einer die Leuchtdiode tragenden Platine mit einem Halteelement montiert. Hierdurch entstehen Variationen in der Positionierung der Leuchtdiode, die zu schlechten Ausleuchtungsergebnissen führen. Außerdem ist die Schraubfertigung und gleichzeitige Positionierung der Platine mit erheblichen Kosten verbunden.

Ein Scheinwerfer für ein Fahrrad, wie er aus dem Stand der Technik bekannt ist, ist in der DE 20 2004 014 096 U1 offenbart.

Von daher liegt der vorliegenden Erfindung die Aufgabe zugrunde, die aus dem Stand der Technik bekannten Nachteile zumindest zu lindern. Insbesondere soll ein Scheinwerfer zur Verfügung gestellt werden, der einfach zu montieren ist und gleichzeitig eine möglichst genaue Positionierung der Leuchtdiode ermöglicht.

Diese Aufgabe wird gelöst durch einen Scheinwerfer mit den Merkmalen des unabhängigen Anspruchs. Abhängige Ansprüche sind auf vorteilhafte Weiterbildungen gerichtet.

Der erfindungsgemäße Scheinwerfer für ein Fahrrad umfasst einen Reflektor zur Reflexion eines von mindestens einer Leuchtdiode ausstrahlbaren Lichts und mindestens ein Halteelement zur Aufnahme mindestens einer mit der mindestens einen Leuchtdiode verbundenen Platine, wobei das Halteelement außerhalb des Reflektors ausgebildet ist und eine Aussparung aufweist, mit der die Platine form- und/oder kraftschlüssig verbindbar ist. Aussparung, Platine, Reflektor und/oder Leuchtdiode sind so ausgestaltet, dass eine erste Hauptabstrahlrichtung der Leuchtdiode und eine zweite Hauptabstrahlrichtung des Reflektors einen Winkel zwischen 90° und 130° einschließen.

Unter dem Reflektor wird insbesondere ein Bauteil verstanden, welches das Licht der Leuchtdiode reflektiert. Insbesondere umfasst der Reflektor mindestens eine gekrümmte Reflexionsfläche. Die Summe dieser Reflexionsflächen wird als optisch aktiver Bereich des Reflektors verstanden. Da das Halteelement außerhalb des Reflektors ausgebildet ist, ist die Aussparung zur Aufnahme der Platine nicht im optisch aktiven Bereich des Reflektors ausgebildet. Der Reflektor ist folglich aussparungsfrei ausgebildet. Das Halteelement kann insbesondere an dem Reflektor angeformt sein. Bevorzugt ist der Scheinwerfer so ausgebildet, dass die Leuchtdiode seitlich des Reflektors positioniert wird. Dies gestattet die Positionierung der Leuchtdiode im Brennpunkt der mindestens einen Reflexionsfläche ohne Einbußen an zur Verfügung stehender Reflexionsfläche, da die Platine außerhalb des optisch aktiven Bereichs des Reflektors liegt. Dies ermöglicht den Aufbau eines kleinen Reflektors mit guter Lichtausbeute.

Durch den erfindungsgemäßen Winkel zwischen der ersten und der zweiten Hauptabstrahlrichtung ist es insbesondere möglich, dass die Leuchtdiode im Vergleich zur zweiten Hauptabstrahlrichtung des Reflektors, die üblicherweise im Wesentlichen in einer Horizontalen liegt, nach oben oder nach unten abstrahlt. Dies erlaubt eine Ausgestaltung, bei der die Leuchtdiode beim Blick in den Reflektor aus einer Richtung entgegen der zweiten Hauptabstrahlrichtung nicht sichtbar ist. Die Leuchtdiode kann somit außerhalb des üblicherweise sichtbaren und optisch aktiven Bereichs des Reflektors ausgebildet werden, so dass mehr Reflektorfläche zur Verfügung steht. So können besonders ansprechende und effektive Scheinwerfer hergestellt werden. Insbesondere sind Reflektor, Aussparung und/oder Platine so ausgebildet, dass die Leuchtdiode im eingebauten Zustand im Brennpunkt des Reflektors gelegen ist.

Besonders bevorzugt ist hierbei ein Winkel von 115° bis 120°, insbesondere 117°.

Bevorzugt ist die kraft- und/oder formschlüssige Verbindung eine Klemm- und/oder Rastverbindung. Dies ermöglicht eine schnelle und einfache Montage des Scheinwerfers, so dass auf umständliche Schraub- und/oder Klebarbeiten verzichtet werden kann.

Gemäß einer vorteilhaften Ausgestaltung des erfindungsgemäßen Scheinwerfers ist auch ein Kühlkörper in der Aussparung aufnehmbar und bewirkt die kraft- und/oder formschlüssige Verbindung der Platine mit der Aussparung

Insbesondere bewirkt der Kühlkörper eine Rast- und/oder Klemmverbindung, die eine Fixierung der entsprechenden Platine bewirkt. Der Reflektor ist insbesondere so ausgestaltet, dass der Scheinwerfer für ein Fahrrad die entsprechenden gesetzlichen Vorgaben, insbesondere der Straßenverkehrszulassungsordnung erfüllt.

Die Ausbildung einer Rast- und/oder Klemmverbindung bewirkt durch die Platine und/oder den Kühlkörper ermöglicht die einfache Montage bei gleichzeitiger Fixierung der Leuchtdiode in einer vorbestimmbaren Position, so dass diese im Wesentlichen im Brennpunkt des Reflektors fixierbar ist. Im Falle eines Reflektors, welcher aus mehreren Reflektorabschnitten beziehungsweise Reflexionsflächen aufgebaut ist, liegt die vorbestimmbare Position insbesondere im Brennpunkt der Reflektorabschnitte.

Gemäß einer weiteren vorteilhaften Ausgestaltung des erfindungsgemäßen Scheinwerfers ist das Halteelement mit dem Reflektor verbunden, insbesondere stoffschlüssig verbunden.

Bevorzugt ist hierbei ein Anformen des Halteelements oder auch eine Kleb- und/oder Schweißverbindung.

Gemäß einer weiteren vorteilhaften Ausgestaltung der vorliegenden Erfindung weist die erste Aussparung Zentriermittel auf, die beim Einschieben der Platine in die Aussparung gewährleisten, dass die Leuchtdiode eine vorbestimmte Position erreicht.

Insbesondere liegt diese vorbestimmte Position so, dass sich die Leuchtdiode im Brennpunkt des Reflektors befindet. Die Aussparung, die Platine, der Kühlkörper, die Leuchtdiode und/oder die Zentriermittel sind insbesondere so ausgebildet, dass die vorbestimmte Position mit einer Genauigkeit von weniger als 1/10 mm erreicht wird. Dies gewährleistet eine einfache Montierbarkeit bei gleichzeitiger sehr genauer Justierung der Leuchtdiode im Reflektor.

Gemäß einer weiteren vorteilhaften Ausgestaltung stehen Platine und Kühlkörper in thermischem Kontakt.

In diesem Falle wird nicht nur die Leuchtdiode, sondern auch die Platine zur Wärmeübertragung auf den Kühlkörper benutzt. Der Kühlkörper ist insbesondere so ausgestaltet, dass eine Abgabe der Wärme beispielsweise über konvektive und/oder Strahlungsprozesse möglich ist. Bevorzugt wird dabei der Kühlkörper so ausgebildet, dass er mit einem Gehäuse des Scheinwerfers in thermischem Kontakt steht und/oder zumindest einen Teil der Gehäuseoberfläche bildet.

Gemäß einer weiteren vorteilhaften Ausgestaltung der erfindungsgemäßen Vorrichtung ist ein federndes Element ausgebildet, welches die kraft- und/oder formschlüssige Verbindung vermittelt.

In diesem Falle ist der Scheinwerfer also so ausgestaltet, dass der Kühlkörper die kraft- und/oder formschlüssige Verbindung unter Vermittlung des federnden Elementes bewirkt. Bevorzugt ist die Platine auf einer Seite des Kühlkörpers, während das federnde Element auf einer entgegengesetzten Seite des Kühlkörpers ausgebildet ist.

Gemäß einer weiteren vorteilhaften Ausgestaltung des erfindungsgemäßen Scheinwerfers weist der Kühlkörper eine Wärmeleitfähigkeit von mindestens 150 Watt pro Meter und Kelvin bei 0°C auf

Ein Kühlkörper mit einer solchen Wärmeleitfähigkeit hat sich als besonders vorteilhaft erwiesen, da durch die entsprechende Wärmeleitfähigkeit eine gute Abführung der Wärme gewährleistet werden kann. Bevorzugtes Material für die Ausbildung des Kühlkörpers ist ein Material umfassend Aluminium, insbesondere Aluminium. Bevorzugt ist der Kühlkörper so ausgebildet, dass er eine große Oberfläche aufweist, die bevorzugt in thermischem Kontakt mit dem Gehäuse des Scheinwerfers steht, so dass eine Abfuhr der Wärme an die Umgebung befördert wird.

Gemäß einer weiteren vorteilhaften Ausgestaltung des erfindungsgemäßen Scheinwerfers kann die Leuchtdiode einen Lichtstrom von mindestens 100 Lumen, vorzugsweise 170 Lumen bei 1 Ampere Strom aussenden.

Das bedeutet, dass der Lichtstrom von mindestens 100 Lumen erreicht wird, wenn die Leuchtdiode von einem Strom von 1 Ampere durchflossen wird. Ein so hoher Lichtstrom gewährleistet eine ausreichende Beleuchtung der Straße beim Einsatz am Zweirad bei gleichzeitiger Erfüllung der Normen der Straßenverkehrszulassungsordnung. Durch eine entsprechende Ausgestaltung des Reflektors kann eine Blendung anderer Verkehrsteilnehmer ohne Einbußen an Helligkeit vermieden werden. Durch den Einsatz solcher Leuchtdioden lassen sich Beleuchtungsstärken von über 40 Lux in einer Entfernung von 10 Metern erreichen.

Gemäß einer weiteren vorteilhaften Ausgestaltung des erfindungsgemäßen Scheinwerfers ist mindestens ein Rückstrahlbereich ausgebildet, der mindestens 40 % der Fläche der Reflektoröffnung bedeckt, aber nur maximal 20% der durch den Reflektor abgegebenen Lichtstrahlung abschattet. Bevorzugt ist hierbei eine Ausführung, bei der sogar mindestens 50% der Fläche der Reflektoröffnung durch den Rückstrahlbereich bedeckt sind.

Dies ist insbesondere unabhängig von der kraft- und/oder formschlüssigen Verbindung zwischen Platine und Reflektor möglich, insbesondere bei einer entsprechenden Positionierung der Leuchtdiode, sodass die erste Hauptabstrahlrichtung der Leuchtdiode und die zweite Hauptabstrahlrichtung des Reflektors einen Winkel von 90° bis 130° einschließen.

Im Folgenden wird der erfindungsgemäße Scheinwerfer anhand der beigefügten Figuren näher erläutert, ohne auf die dort offenbarten Details und Ausführungsbeispiele beschränkt zu sein. Es zeigen schematisch:
- Fig. 1:: schematisch ein erstes Ausführungsbeispiel eines erfindungsgemäßen Scheinwerfers im Querschnitt;
- Fig. 2:: schematisch das erste Ausführungsbeispiel eines erfindungsgemäßen Scheinwerfers in frontaler Ansicht;
- Fig. 3:: eine perspektivische Zeichnung des ersten Ausführungsbeispiels eines erfindungsgemäßen Scheinwerfers; und
- Fig. 4: schematisch ein zweites Ausführungsbeispiel eines erfindungsgemäßen Scheinwerfers in frontaler Ansicht.

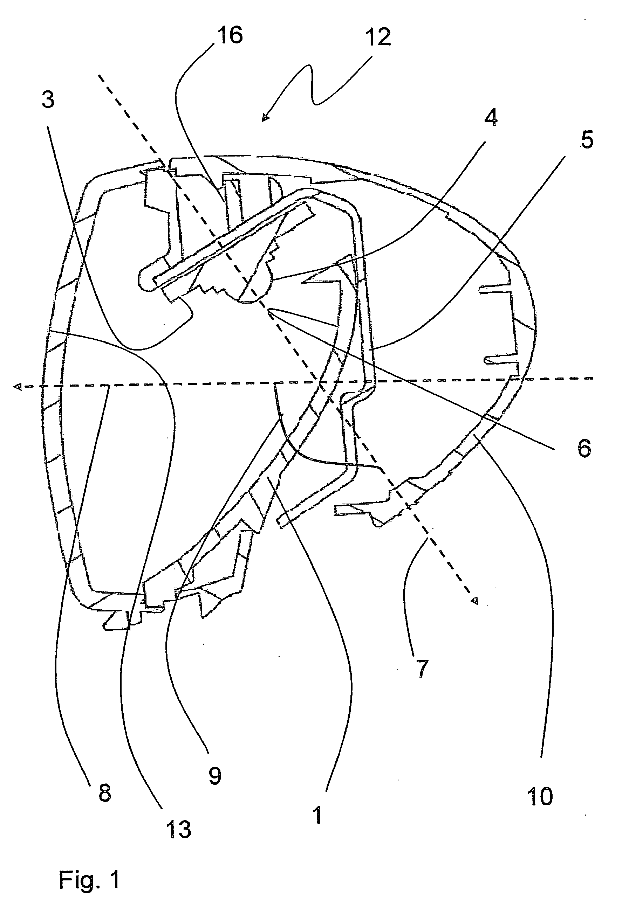

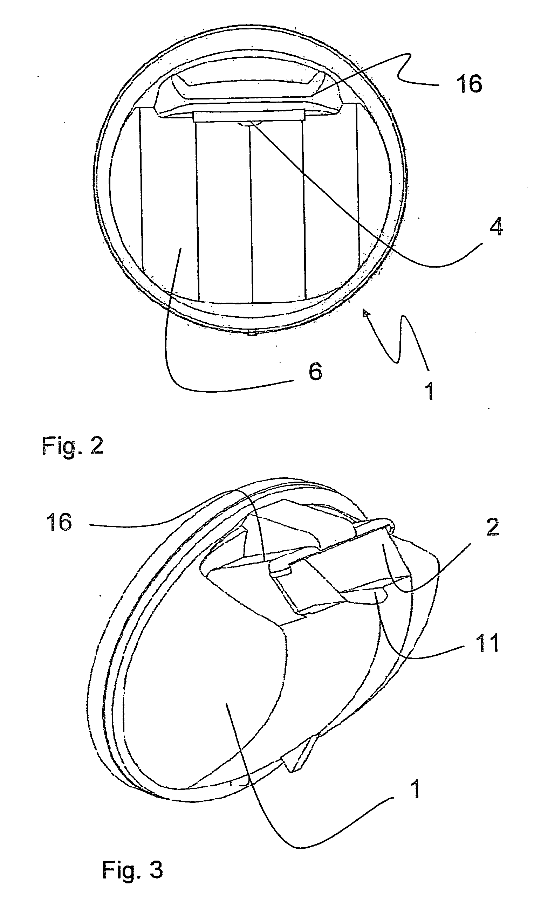

Fig. 1 zeigt schematisch einen Reflektor 1 eines Scheinwerfers 12 für ein Zweirad, insbesondere ein Fahrrad. Der Scheinwerfer umfasst weiterhin ein Halteelement 16. Dieses ist an den Reflektor 1 angeformt. Das Halteelement 16 weist eine Aussparung 2 (siehe insbesondere Fig. 3) auf. In die Aussparung 2 ist erfindungsgemäß einerseits eine Platine 3 mit einer Leuchtdiode 4 und andererseits ein Kühlkörper 5 eingesetzt. Die Aussparung 2 bildet eine Führung für die Platine 3 und in diesem Ausführungsbeispiel auch für den Kühlkörper 5.

Die Platine 3 und in diesem Ausführungsbeispiel auch der Kühlkörper 5 sind kraft- und/oder formschlüssig mit der Aussparung 2 verbunden. Im vorliegenden Ausführungsbeispiel kommt es zu einer Verklemmung der Platine 3 mit der entsprechenden Aussparung 2. Dadurch wird die Platine 3 fixiert und die Leuchtdiode 4 im Brennpunkt des Reflektors 1 gehalten, wobei die Leuchtdiode 4 als solche außerhalb des Reflektors 1 ausgebildet ist. Durch die Ausbildung des Halteelements 16 mit Aussparung 2 außerhalb des Reflektors 1 lässt sich ein kompakt bauender Scheinwerfer 12 realisieren, bei dem trotz eines kompakten Aufbaus eine hohe Lichtausbeute erreicht werden kann. Der Reflektor 1 weist Reflexionsflächen 6 auf, die eine gezielte Lenkung und Bündelung des Lichtes der Leuchtdiode 4 bewirken.

Die Leuchtdiode 4 weist eine erste Hauptabstrahlrichtung 7 auf, die nicht parallel zu einer zweiten Hauptabstrahlrichtung 8 des Reflektors 1 ist. Die Hauptabstrahlrichtungen 7, 8 schließen einen Winkel 9 ein, der größer als 90° ist. Der Reflektor 1 ist im vorliegenden Ausführungsbeispiel in ein Gehäuse 10 eingebaut.

Der Kühlkörper 5 ist so ausgebildet, dass er eine große Oberfläche aufweist und mit der Umgebung des Scheinwerfers 12 in thermischem Kontakt steht. Hierdurch kann Wärme an die Umgebung abgegeben werden.

Fig. 2 zeigt schematisch eine frontale Ansicht eines Reflektors 1 mit eingebauter Leuchtdiode 4 und Reflexionsflächen 6.

Fig. 3 zeigt schematisch eine perspektivische Ansicht des Reflektors 1. Zu erkennen ist die Aussparung 2 im Halteelement 16 zur Aufnahme der Platine 3 und des Kühlkörpers 5. Weiterhin zu erkennen ist ein Zentriermittel 11, welches dafür sorgt, dass beim Einschieben der Platine 3 in die Aussparung 2 die Leuchtdiode 4 eine vorbestimmbare Position, bevorzugt im Brennpunkt des Reflektors 1, erreicht.

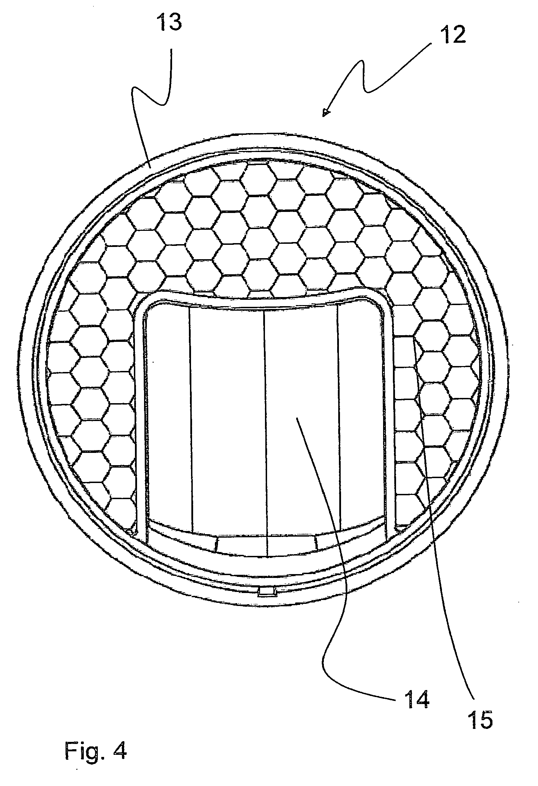

Fig. 4 zeigt schematisch eine frontale Ansicht eines erfindungsgemäßen Scheinwerfers 12. Der Scheinwerfer 12 wird frontal von einer Abdeckung 13 abgedeckt (siehe Figur 1), die im zweiten Ausführungsbeispiel einen lichtdurchlässigen Bereich 14 und einen Rückstrahlbereich 15 aufweist. Aufgrund der Ausrichtung der ersten 7 und zweiten Hauptabstrahlrichtung 8 sowie des Einsatzes einer leuchtstarken Leuchtdiode 4 als Lichtquelle kann so die Rückstrahlfläche 15 mit mehr als 40% der Gesamtfläche der Abdeckung 13 ausgebildet werden. So ist es beispielsweise möglich, bei einer Gesamtfläche der Abdeckung 13 von etwa 18 Quadratzentimetern den Rückstrahlbereich 15 mit einer Fläche von 11 Quadratzentimetern auszubilden. Hierbei sind die Reflektorflächen 6 so ausgebildet, dass eine überwiegende Reflexion des von der Leuchtdiode 4 ausgesandten Lichts in den lichtdurchlässigen Bereich 14 erfolgt. Der Rückstrahlbereich 15 weist bevorzugt Prismen zur Rückstrahlung einfallenden Lichts auf. Alternativ kann die Abdeckung 13 mit einem gänzlich lichtdurchlässigen Bereich 14 ohne Rückstrahlbereich 15 ausgebildet sein.

Der erfindungsgemäße Scheinwerfer ist auf einfache Art und Weise montierbar und garantiert eine gute Positionierung der Leuchtdiode 4 im Reflektor 1. Hierdurch können sehr hell strahlende Scheinwerfer ausgebildet werden, bei denen es insbesondere auch möglich ist, dass ein Rückstrahlbereich ausgebildet ist, der einen Anteil von mindestens 40 % der Fläche der Reflektoröffnung bedeckt.

### Bezugszeichenliste

- 1: Reflektor
- 2: Aussparung
- 3: Platine
- 4: Leuchtdiode
- 5: Kühlkörper
- 6: Reflexionsflächen
- 7: erste Hauptabstrahlrichtung
- 8: zweite Hauptabstrahlrichtung
- 9: Winkel
- 10: Gehäuse
- 11: Zentriermittel
- 12: Scheinwerfer
- 13 3: Abdeckung
- 14: lichtdurchlässiger Bereich
- 15 5: Rückstrahlbereich
- 16: Halteelement

## Patentansprüche

1. Scheinwerfer (12) für ein Fahrrad, umfassend einen Reflektor (1) zur Reflexion eines von mindestens einer Leuchtdiode (4) ausstrahlbaren Lichts und mindestens ein Halteelement (16) zur Aufnahme mindestens einer mit der mindestens einen Leuchtdiode (4) verbundenen Platine (3), wobei das Halteelement außerhalb des Reflektors (1) ausgebildet ist und eine Aussparung (2) aufweist, mit der die Platine (3) form- und/oder kraftschlüssig verbindbar ist, wobei mindestens eines der folgenden Elemente:
a) die Aussparung (2);
b) die Platine (3);
c) der Reflektor (1); und
d) die Leuchtdiode (4)
so ausgestaltet ist, dass eine erste Hauptabstrahlrichtung (7) der Leuchtdiode (4) und eine zweite Hauptabstrahlrichtung (8) des Reflektors (1) einen Winkel (9) zwischen 90° und 130° einschließen.

2. Scheinwerfer (12) nach Anspruch 1, bei dem auch ein Kühlkörper (5) in der Aussparung (2) aufnehmbar ist und dieser die kraft- und/oder formschlüssige Verbindung der Platine (3) mit der Aussparung (2) bewirkt.

3. Scheinwerfer (12) nach einem der vorhergehenden Ansprüche, bei dem das Halteelement (16) mit dem Reflektor (1) verbunden ist, insbesondere stoffschlüssig verbunden ist.

4. Scheinwerfer (12) nach einem der vorhergehenden Ansprüche, bei dem die Aussparung (2) Zentriermittel (11) aufweist, die beim Einschieben der Platine (3) in die Aussparung (2) gewährleisten, dass die Leuchtdiode (4) eine vorbestimmte Position erreicht.

5. Scheinwerfer (12) nach einem der Ansprüche 2 bis 4, bei dem Platine (3) und Kühlkörper (5) in thermischem Kontakt stehen.

6. Scheinwerfer (12) nach einem der vorhergehenden Ansprüche, bei dem ein federndes Element die kraft- und/oder formschlüssige Verbindung vermittelt.

7. Scheinwerfer (12) nach Anspruch 6, bei dem die Platine (3) auf einer Seite des Kühlkörpers (5) und das federnde Element auf einer entgegengesetzten Seite des Kühlkörpers (5) ausgebildet ist.

8. Scheinwerfer (12) nach einem der vorhergehenden Ansprüche, bei dem der Kühlkörper (5) eine Wärmeleitfähigkeit von mindestens 150 W/(m K) (Watt pro Meter und Kelvin) bei 0°C (Celsius) aufweist.

9. Scheinwerfer (12) nach einem der vorhergehenden Ansprüche, bei dem die Leuchtdiode (4) einen Lichtstrom von mindestens 100 Lumen bei 1 Ampere Strom aussenden kann.

10. Scheinwerfer (12) nach einem der vorhergehenden Ansprüche, bei dem mindestens ein Rückstrahlbereich (15) ausgebildet ist, der mindestens 50% der Fläche der Reflektoröffnung bedeckt.

## Claims

1. Headlight (12) for a bicycle, comprising a reflector (1) for reflecting light emitted from at least one LED (4), and at least one retaining element (16) for receiving at least one circuit board (3) that is connected to the at least one LED (4), the retaining element being formed outside the reflector (1) and comprising a recess (2) to which the circuit board (3) can be positively and/or non-positively connected, at least one of the following elements:
a) the recess (2);
b) the circuit board (3);
c) the reflector (1); and
d) the LED (4)
being formed such that a first main beam direction (7) of the LED (4) and a second main beam direction (8) of the reflector (1) enclose an angle (9) of between 90° and 130°.

2. Headlight (12) according to claim 1, in which a heat sink (5) can be received in the recess (2) and brings about the positive and/or non-positive connection between the circuit board (3) and the recess (2).

3. Headlight (12) according to any of the preceding claims, in which the retaining element (16) is connected to the reflector (1), in particular in a material connection.

4. Headlight (12) according to any of the preceding claims, in which the recess (2) comprises centring means (11), which ensure that the LED (4) reaches a predetermined position when the circuit board (3) is inserted into the recess (2).

5. Headlight (12) according to any of claims 2 to 4, in which the circuit board (3) and the heat sink (5) are in thermal contact.

6. Headlight (12) according to any of the preceding claims, in which a resilient element facilitates the positive and/or non-positive connection.

7. Headlight (12) according to claim 6, in which the circuit board (3) is formed on one side of the heat sink (5) and the resilient element is formed on an opposite side of the heat sink (5).

8. Headlight (12) according to any of the preceding claims, in which the heat sink (5) has a thermal conductivity of at least 150 W/(m K) (watts per metre and Kelvin) at 0 °C (Celsius).

9. Headlight (12) according to any of the preceding claims, in which the LED (4) can emit a luminous flux of at least 100 lumens at a current of 1 ampere.

10. Headlight (12) according to any of the preceding claims, in which at least one reflection region (15) is formed, which covers at least 50 % of the surface of the reflector opening.

## Revendications

1. Phare (12) pour un vélo, comprenant un réflecteur (1) pour la réflexion d'une lumière pouvant être émise par au moins une diode lumineuse (4), et au moins un élément de retenue (16) pour loger au moins une platine (3) raccordée à la diode lumineuse (4) au moins au nombre de un, l'élément de retenue étant constitué à l'extérieur du réflecteur (1) et présentant un évidement (2) avec lequel la platine (3) peut être raccordée par liaison de forme et/ou de force, au moins un des éléments suivants :
a) l'évidement (2) ;
b) la platine (3) ;
c) le réflecteur (1) ; et
d) la diode lumineuse (4)
étant constitué de sorte qu'une première direction d'émission principale (7) de la diode lumineuse (4) et une deuxième direction d'émission principale (8) du réflecteur (1) enferment un angle (9) entre 90° et 130°.

2. Phare (12) selon la revendication 1, dans lequel également un dissipateur de chaleur (5) peut être logé dans l'évidement (2) et réalise le raccordement par liaison de forme et/ou de force de la platine (3) avec l'évidement (2).

3. Phare (12) selon l'une des revendications précédentes, dans lequel l'élément de retenue (16) est raccordé au réflecteur (1), en particulier est raccordé par liaison de matière.

4. Phare (12) selon l'une des revendications précédentes, dans lequel l'évidement (2) présente des moyens de centrage (11) qui, lors de l'insertion de la platine (3) dans l'évidement (2), garantissent que la diode lumineuse (4) atteint une position prédéfinie.

5. Phare (12) selon l'une des revendications 2 à 4, dans lequel la platine (3) et le dissipateur de chaleur (5) sont en contact thermique.

6. Phare (12) selon l'une des revendications précédentes, dans lequel un élément élastique réalise le raccordement par liaison de force et/ou de forme.

7. Phare (12) selon la revendication 6, dans lequel la platine (3) est constituée sur un côté du dissipateur de chaleur (5) et l'élément élastique est constitué sur un côté opposé du dissipateur de chaleur (5).

8. Phare (12) selon l'une des revendications précédentes, dans lequel le dissipateur de chaleur (5) présente une conductibilité thermique d'au moins 150 W/(m K) (watt par mètre et kelvin) à 0 °C (Celsius).

9. Phare (12) selon l'une des revendications précédentes, dans lequel la diode lumineuse (4) peut émettre un flux lumineux d'au moins 100 lumens pour une intensité de 1 ampère.

10. Phare (12) selon l'une des revendications précédentes, dans lequel au moins une zone de réflexion (15) est constituée qui couvre au moins 50 % de la surface de l'ouverture de réflecteur.
